# EUROPEAN PATENT APPLICATION

(11) **EP 4 681 791 A1**
(43) Date of publication of application: **21.01.2026**
(21) Application number: 24797147.6
(22) Date of filing: 25.04.2024
(51) Int. Cl.: A63F 1/06, G06K 7/10, G06K 19/04, G06K 19/07

(54) **GAME TABLE SYSTEM AND SYSTEM**

(30) Priority: 28.04.2023 JP 2023075292
(71) Applicant: ANGEL GROUP CO., LTD., Higashiomi-shi Shiga 527-0232 (JP)
(72) Inventor: SHIGETA Yasushi, Higashiomi-shi, Shiga 527-0232 (JP)
(74) Representative: Bardehle Pagenberg Partnerschaft mbB Patentanwälte Rechtsanwälte
(86) International application number: PCT/JP2024/016339
(87) International publication number: WO 2024/225402

(57) **Abstract**

Providing a gaming table system for reading a gaming chip on a gaming table, by using reading of an RFID tag and image recognition and so effectively utilizing advantages of both.

A gaming table system (100) comprises: a camera (40) configured to take an image of a chip stack placed on a gaming table (10) to generate an image; an image recognizing portion (81) configured to analyze the image to recognize a position of the chip stack and a type and number of gaming chip; a plurality of antennas (ANT1-ANT9) configured to read an RFID tag of the gaming chip; and a chip judging portion (82) configured to associate a reading result of the RFID tag by each of the plurality of antennas (ANT1-ANT9) and a recognizing result of the chip stack by the image recognizing portion (81) with each other.

## Description

### CROSS-REFERENCE OF RELATED APPLICATION

This application claims the benefit of Japanese Patent Application No. 2023-075292 filed in Japan on April 28, 2023, the contents of which application is incorporated herein by reference.

### TECHNICAL FIELD

The present invention relates to a gaming table system configured to read on a gaming table a gaming chip in which an RFID tag is built and a system configured to read on a predetermined location an article in which an RFID tag is built.

### BACKGROUND

Conventionally, a camera system is known, the camera system configured to, on a gaming table where a game using a gaming chip is to be played, take an image of the gaming chip used in the game to generate an image, and perform image recognition processing on the image to read the gaming chip used in the game. Since, for a gaming chip, a type (value) thereof is identifiable from an appearance thereof, it is possible to identify the type of gaming chip used in the game by image recognition processing. Moreover, various areas based on game rules are defined on the gaming table, and it is also possible to recognize which area the gaming chip is placed on by image recognition processing.

The areas defined on the gaming table includes a betting area on which a player places the gaming chip betting on the game, for example. The camera system can recognize the gaming chip bet on the betting area (betting chip), especially a chip stack formed by stacking a plurality of gaming chips on the betting area (betting chip stack) to grasp which of the betting areas and how much gaming chips are bet on.

On the other hand, an RFID system is also known, in which an RFID tag is built in the gaming chip, a type (value) of the gaming chip, chip identifying information, etc. are stored in the RFID tag, an antenna for performing wireless communication with the RFID tag within the gaming chip and a reader for reading the information stored in the RFID tag using the antenna are provided in the gaming table, thereby recognizing the gaming chip placed on the gaming table.

### SUMMARY

Although, in the camera system, it is possible to read from the image which type of gaming chip is placed, which area (position) the gaming chip of the type is placed on, and how many gaming chips of the type are placed on the area, it is difficult to read any more detailed information about each gaming chip. For example, it may consider writing the chip identifying information on the perimeter side surface of the gaming chip and reading it by a camera, but such writing of the chip identifying information must be a small writing, and accurate reading is not easy.

On the other hand, since the RFID system reads the RFID tag to read the information of each gaming chip, it is possible to store various information in the RFID tag and thereby obtain the detailed information about the gaming chip. However, since the RFID system performs the reading of the RFID tag using electromagnetic waves, even if trying to read to distinguish by a plurality of antennas provided in respective areas, it is difficult to exactly set a reading rang of each antenna, and one antenna for reading one area may also read the RFID tag of the gaming chip in another adjacent area, and therefore, it is not easy to accurately recognize which area the gaming chip whose RFID tag is read by each antenna is on.

Moreover, in the RFID system, even if there is a gaming chip whose RFID tag is broken or which does not include the RFID tag, it is impossible to detect such gaming chip of RFID illicitness.

Therefore, the present invention includes one purpose of providing a gaming table system for reading a gaming chip on a gaming table, by using an RFID tag built in the gaming chip in order to assist a camera system and so effectively utilizing advantages of both.

A gaming table system according to an aspect of the present invention is a gaming table system configured to read on a gaming table a gaming chip in which an RFID tag is built. A betting area including a plurality of betting target areas arranged so as to be close to or contact with each other is arranged on the gaming table. The gaming table system has a configuration comprising: a reading means including a plurality of antennas provided at a plurality of locations on the gaming table and configured to read the RFID tag of the gaming chip within a reading range, wherein reading ranges of adjacent antennas of the plurality of antennas overlap each other, whereby the reading ranges of the plurality of antennas cover the plurality of betting target areas; an imaging means configured to take an image of the betting area including the plurality of betting target areas arranged so as to be close to or contact with each other to generate an image including a chip stack consisting of one gaming chip or a plurality of gaming chips placed on the betting area; an image recognizing means configured to analyze the image to recognize a position of the chip stack on the gaming table and a type and number of gaming chip constituting the chip stack; and a chip judging means configured to estimate which antenna of the plurality of antennas within the betting area on which the gaming chip is placed the gaming chip is placed on a region corresponding to the reading range of and also where region within the reading range of the corresponding antenna the gaming chip is placed on, based on a reading result of the RFID tag by each of the plurality of antennas of the reading means, and associate the chip stack recognized by the image recognizing means and the reading result of the RFID tag by the reading means with each other based on an estimating result and a recognizing result of the chip stack by the image recognizing means.

By this configuration, it is possible to associate the chip stack recognized by the image recognition and the reading result of the RFID tag built in the gaming chip of the chip stack with each other.

In the above gaming table system, the betting area may include one region or a plurality of regions on which the RFID tag of the gaming chip placed are read by the plurality of antennas due to that the reading ranges of the antennas adjacent to each other overlap each other, and the chip judging means may be configured to estimate a region smaller than the reading range of the plurality of antennas as the region on which the gaming chip is placed based on a combination of the reading results of the plurality of antennas.

By this configuration, it is possible to estimate the region smaller than the reading range of the antenna as the region on which the gaming chip is placed.

In the above gaming table system, the reading means may be configured to repeatedly perform reading using the plurality of antennas, the imaging means may be configured to repeatedly take images to generate sequential images, and the chip judging means may be configured to associate a chip stack recognized by the image recognizing means and a reading result of the RFID tag by the reading means based on a reading result and recognizing result at a timing when a chip stack is newly placed on the betting area.

By this configuration, it is possible to repeatedly perform the association between the chip stack recognized by the image recognizing means and the reading result of the RFID tag by the reading means in a betting stage of the chip stack.

In the above gaming table system, the reading means may be configured to repeatedly perform reading using the plurality of antennas, and the chip judging means may be configured to recognize a plurality of gaming chips whose RFID tags are read by a same antenna at a same timing as one chip stack, and recognize a plurality of gaming chips whose RFID tags are read by a same antenna at a different timing as other chip stack different from the one chip stack.

By this configuration, it is possible to read to distinguish each chip stack based on the timing of the reading by the reading means.

The above gaming table system may further comprise a possessor identifying means configured to identify a possessor of the gaming chip based on the reading result of the RFID tag of the gaming chip by the reading means, and the chip judging means may be configured to recognize a plurality of gaming chips identified to be possessed by a same possessor by the possessor identifying means among a plurality of gaming chips placed in a same estimated region, as one chip stack.

By this configuration, it is possible to recognize the chip stack by identifying the possessor based on the reading of the RFID tag.

In the above gaming table system, contents stored in the RFID tag built in the gaming chip may include chip identifying information for uniquely identifying the gaming chip, and the chip judging means may be configured to associate the chip identifying information of the gaming chip included in the chip stack with the chip stack recognized by the image recognizing means.

By this configuration, it is possible to associate the chip identification information read from the RFID tag and the chip stack recognized by image recognition with each other.

The above gaming table system comprising the possessor identifying means may further comprise a possessor updating means configured to rewrite possessor information of a gaming chip paid out by a dealer for a gaming chip which has won a game as a result of a game using the gaming chip over possessor information of the gaming chip which has won the game.

By this configuration, it is possible to rewrite the possessor information of the gaming chip paid out by the dealer over the possessor information of the betting chip.

In the above gaming table system, the chip stack consisting of the one gaming chip or plurality of gaming chips placed on the betting area may be a chip stack bet on a game. The chip judging means may be configured to associate, for the bet chip stack, the chip stack recognized by the image recognizing means and the reading result of the RFID tag by the reading means with each other.

By this configuration, it is possible to associate the image recognizing result and the reading result of the RFID tag with each other for the bet chip stack.

In the above gaming table system, the chip stack consisting of the one gaming chip or plurality of gaming chips placed in the betting area may be a chip stack paid by a dealer for a chip stack which has bet on a game and won the game. The chip judging means may be configured to associate, for the paid chip stack, the chip stack recognized by the image recognizing means and the reading result of the RFID tag by the reading means with each other.

By this configuration, it is possible to associate the image recognizing result and the reading result of the RFID tag for the paid-out chip stack.

In the above gaming table system, the reading ranges of the plurality of antennas may cover the entire betting area on the gaming table.

By this configuration, it is possible to read the chip stack over the entire betting area.

In the above gaming table system, the chip judging means may be configured to judge, when a number of gaming chip whose placed region is estimated based on the reading result of the RFID tag is less than a number of gaming chip which is recognized to be placed within the region by the image recognizing means, that the chip stack includes an illicit gaming chip of which there is an illicitness in the RFID tag within the region.

By this configuration, it is possible to judge that the illicit gaming chip whose RFID tag cannot be read is included.

In the above gaming table system, the chip judging means may be configured to judge, when a number of gaming chip whose placed region is estimated based on the reading result of the RFID tag is more than a number of gaming chip which is recognized to be placed within the region by the image recognizing means, that a gaming chip which is in a blind spot of the imaging means and not recognized by the image recognizing means is included within the region.

By this configuration, it is possible to judge the region including the gaming chip which is in the blind spot of the imaging means and not image-recognized.

In the above gaming table system, type identifying information for identifying a type of gaming chip may be to be stored in the RFID tag built in the gaming chip, and the chip judging means may be configured to judge, for the chip stack recognized by the image recognizing means, that the chip stack includes an illicit gaming chip when a type and number of gaming chip indicated by the reading result of the RFID tag is different from the type and number of gaming chip in the chip stack recognized by the image recognizing means.

By this configuration, it is possible to judge that the illicit gaming chip presents when the reading result of the RFID tag and the image recognition are inconsistent with each other with respect to the type and number of gaming chip.

In the above gaming table system, type identifying information for identifying a type of gaming chip may be to be stored in the RFID tag built in the gaming chip, and the chip judging means may be further configured to identify the chip stack including the illicit gaming chip among the chip stacks recognized by the image recognizing means based on a type and number of gaming chip indicated by the reading result of the RFID tag and the type and number of gaming chip recognized by the image recognizing means.

By this configuration, it is possible to identify the chip stack including the illicit gaming chip using information of the type and number of gaming chip indicated by the reading result of the RFID tag and the image recognizing result, respectively.

In the above gaming table system, the chip judging means may be configured to judge that a plurality of chip stacks whose possibility of including the illicit gaming chip is greater than a predetermined threshold value is the chip stack including the illicit gaming chip when the chip judging means cannot identify uniquely the chip stack including the illicit gaming chip.

By this configuration, it is possible to identify, even when it is impossible to uniquely identify the chip stack including the illicit gaming chip, the chip stack having a possibility of this.

In the above gaming table system, type identifying information for identifying a type of gaming chip may be to be stored in the RFID tag built in the gaming chip, the type of gaming chip may correspond to a value of the gaming chip, and the chip judging means may be configured to judge an amount of the chip stack based on the type identifying information.

By this configuration, it is possible to judge the amount of chip stack based on the reading result of the RFID tag.

The above gaming table system may further comprise a player identifying means configured to identify a player playing a game on the gaming table, and the chip judging means may be further configured to identify a player corresponding to the chip stack recognized by the image recognizing means.

By this configuration, it is possible to identify the player corresponding to the chip stack placed on the gaming table.

In the above gaming table system, chip identifying information for uniquely identifying the gaming chip may be to be stored in the RFID tag built in the gaming chip, the betting area may include a betting area provided for each of a plurality of players, and the gaming table system may further have a configuration comprising: a database configured to store chip identifying information and player identifying information for identifying a player so as to associate with each other; a player identifying means configured to identify player identifying information of players playing in the plurality of player positions; and an alert means configured to output an alert when the player identifying information identified by the player identifying means is not associated in the database with the chip identifying information of the gaming chip identified as being in the player position at which the player plays.

By this configuration, it is possible to output the alert when the player different from the player who should possess the gaming chip possess it and use it at the gaming table.

A system according to an aspect of the present invention is a system configured to read on a predetermined location an article in which an RFID tag is built. A plurality of divided areas arranged so as to be close to or contact with each other is arranged on the predetermined location. The system has a configuration comprising: a reading means including a plurality of antennas provided at a plurality of locations on the predetermined location and configured to read the RFID tag of the article within a reading range, wherein reading ranges of adjacent antennas of the plurality of antennas overlap each other, whereby the reading ranges of the plurality of antennas cover the plurality of divided areas; an imaging means configured to take an image of the plurality of divided areas arranged so as to be close to or contact with each other to generate an image including a group of article consisting of one article or a plurality of articles placed on the predetermined location; an image recognizing means configured to analyze the image to recognize a position of the group of article on the predetermined location and a type and number of article constituting the group of article; and a judging means configured to estimate which antenna of the plurality of antennas within the predetermined location on which the article is placed the article is placed on region corresponding to the reading range of and also where region within the reading range of the corresponding antenna the article is placed on, based on a reading result of the RFID tag by each of the plurality of antennas of the reading means, and associate the group of article recognized by the image recognizing means and the reading result of the RFID tag by the reading means with each other based on an estimating result and a recognizing result of the group of article by the image recognizing means.

By this configuration, it is possible to associate the group of article recognized by the image recognition and the reading result of the RFID tag built in the article of the group of article.

A gaming table system according to an aspect of the present invention is a gaming table system configured to read on a gaming table a gaming chip in which an RFID tag is built. In the gaming table system, a betting area may include a plurality of betting target areas arranged so as to be close to or contact with each other is arranged on the gaming table. The gaming table system has a configuration comprising: a reading means including a plurality of antennas provided at a plurality of locations on the gaming table and configured to read the RFID tag of the gaming chip within a reading range; and a chip judging means configured to estimate a position on which the gaming chip is placed based on a reading result of the RFID tag by each of the plurality of antennas of the reading means. Reading ranges of adjacent antennas of the plurality of antennas overlap each other, whereby the reading ranges of the plurality of antennas cover the plurality of betting target areas. The chip judging means is configured to estimate a region on which the gaming chip is placed with a resolution smaller than the reading range of the plurality of antennas based on a combination of the reading results of the plurality of antennas.

By this configuration, it is possible to estimate the region on which the gaming chip is located with the resolution smaller than the reading range of the plurality of antennas by combining the reading results of the plurality of antennas whose reading ranges overlap each other.

A gaming table system according to an aspect of the present invention is a gaming table system configured to read on a gaming table a gaming chip in which an RFID tag is built. In the gaming table system, a betting area including a plurality of betting target areas arranged so as to be close to or contact with each other is arranged on the gaming table. The gaming table system has a configuration comprising: a reading means including a plurality of antennas provided at a plurality of locations on the gaming table and configured to read the RFID tag of the gaming chip within a reading range; and a chip judging means configured to estimate a position on which the gaming chip is placed based on a reading result of the RFID tag by each of the plurality of antennas of the reading means. The reading means is configured to repeatedly perform reading using the plurality of antennas, and the chip judging means is configured to recognize a plurality of gaming chips whose RFID tags are read by a same antenna at a same timing as one chip stack, and recognize a plurality of gaming chips whose RFID tags are read by a same antenna at a different timing as other chip stack different from the one chip stack.

By this configuration, it is possible to group to divide the plurality of gaming chips placed within the same reading range based on the timing of the reading by the reading means.

### BRIEF DESCRIPTION OF DRAWINGS

Fig. 1 is a perspective vier showing a gaming chip used in a gaming table system according to an embodiment of the present invention.
FIG. 2 is a view showing a gaming table in which a gaming table system is incorporated according to the embodiment of the present invention.
FIG. 3 is a view showing an example of an image taken by a camera according to the embodiment of the present invention.
FIG. 4 is a view showing an example of an image taken by the camera according to the embodiment of the present invention.
FIG. 5 is a view showing an arrangement of antennas in the gaming table system according to the embodiment of the present invention.
FIG. 6 is a view showing an intensity distribution of electromagnetic wave formed by one antenna according to the embodiment of the present invention.
FIG. 7 is a block diagram showing a configuration of the gaming table system according to the embodiment of the present invention.
FIG. 8 is a view showing a relationship between the antenna and the gaming chip in the gaming table according to the embodiment of the present invention.
FIG. 9 is a table showing a reading result of RFID tags in the case of FIG. 8.
FIG. 10 is a table showing an example of betting chip stacks recognized by an image recognizing portion according to the embodiment of the present invention.
FIG. 11 is a table showing a result of judging by a chip judging portion according to the embodiment of the present invention.
FIG. 12 is a view showing a variant example of the arrangement of the antennas in the gaming table system according to the embodiment of the present invention.

### EMBODIMENTS

Hereinafter, embodiments of the present invention will be described referring to the drawings. The embodiments described below shows examples of cases implementing the present invention, and does not limit the present invention to concrete configurations described below. In implementing the present invention, concrete configurations according to the embodiments may be adopted appropriately.

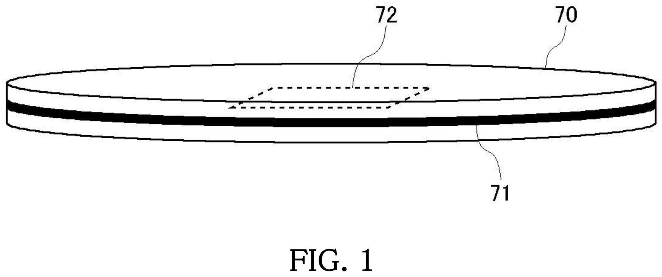

Fig. 1 is a perspective vier showing a gaming chip used in a gaming table system according to an embodiment of the present invention. The gaming chip 70 has a disk shape. A numeral indicating a type (value) of the gaming chip 70 is written on the front and back flat surfaces. A center line 71 whose color is different depending on the type appears on the side surface. Even when the gaming chips 70 are stacked and only the side surface can be observed, the type of the gaming chip 70 can be recognized by this center line 71.

The gaming chip 70 may not include the centerline on its side surface. In this case, by making a color of the side surface different for each type, the type of gaming chip 70 can be recognized by the color of the side surface.

An RFID tag 72 is built in the gaming chip 70. The RFID tag 72 consists of an antenna and an IC chip. The RFID tag 72 performs wireless communication with an antenna described below in a passive manner. The RFID tag 72 may be encapsulated in a capsule for protecting it, and the capsule may be built in the gaming chip 70. The gaming chip may be in a rectangular plate shape.

The RFID tag 72 stores information for uniquely identifying the gaming chip 70 (chip ID), the type (value), a date of manufacture, and information for identifying a casino etc. in which it is scheduled to be used.

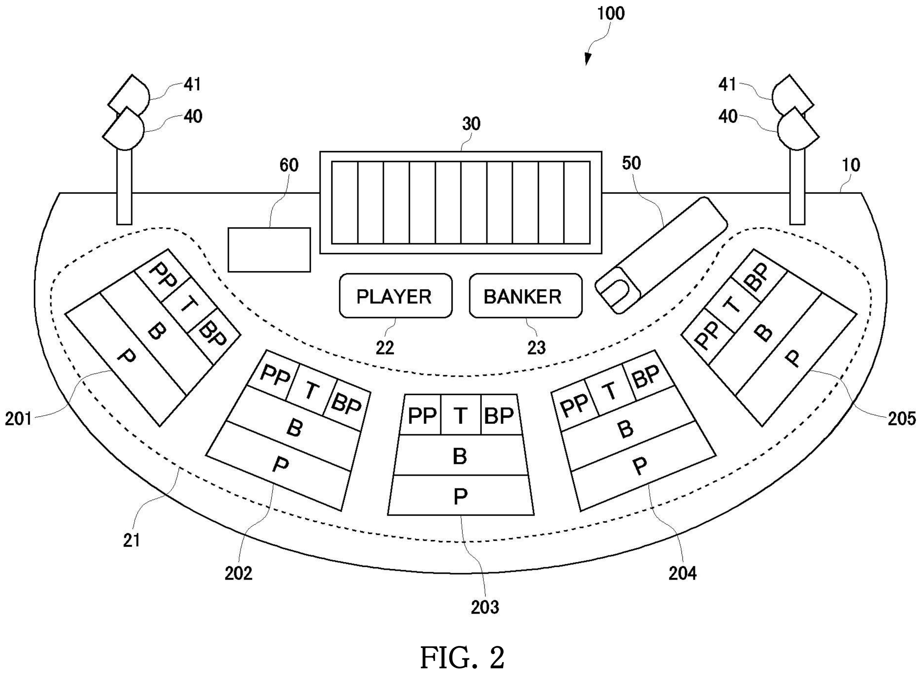

FIG. 2 is a view showing a gaming table in which the gaming table system is incorporated according to the embodiment of the present invention. The gaming table system 100 is installed on each of a plurality of gaming tables 10 in a casino and reads the gaming chip 70 on the gaming table 10. The gaming table 10 is in generally oval shape. A dealer positions on one side of the gaming table 10, and a plurality of player positions for a plurality of players are provided on the opposite side of the gaming table 10 to the side on which the dealer positions. The gaming table 10 according to the present embodiment is a table for playing baccarat.

A chip tray 30 for storing the gaming chips 70 of the dealer are provided on the dealer side of the gaming table 10. A card shoe 50 housing a plurality of decks of playing cards and for drawing playing cards therefrom is also placed on the gaming table 10. A code indicating a rank is written on the playing card housed in the card shoe 50 and used in a game. The code is printed on the front side surface of the playing card with ink which become visible by a black light. The card shoe 50 includes a black light and a sensor for reading the code of the card being drawn. Furthermore, a display 60 is embedded on the dealer side of the gaming table 10.

Each player position is provided with a betting area distinguished for each player 201-205. A plurality of betting area distinguished for each player 201-205 for a plurality of players is arranged side by side, and constitute a betting area 21 as a whole. Each of the betting area distinguished for each player 201-205 is provided with, as betting target areas, a player area "P" for betting on a player win, a banker area "B" for betting on a banker win, a tie area "T" for betting on a tie, a player pair area "PP" for betting on a player pair, and a banker pair area "BP" for betting on a banker pair. These betting target areas are arranged so as to be close to or contact with each other. The tie, player pair, and banker pair are called side bets, and those betting target areas are called side betting areas. A plurality of antennas is embedded in the betting area 21. The antennas will be described below.

Each betting area distinguished for each player 201-205 may further be provided with a betting target area for the side bet called "Lucky 6" or "Super 6" for betting that a banker wins by 6, for example. The side bet areas may not be provided in each betting area distinguished for each player 201-205, betting areas for the plurality of player positions may be located so as to be grouped together for each type of side bet in the center portion of the gaming table 10. A player hand area 22 for placing playing cards which serve as a player hand and a banker hand area 23 for placing playing cards which serve as a banker hand are also laid out on the gaming table 10.

A player participates (bets) in a game by placing the own gaming chip 70 on one of the betting target areas in the betting area distinguished for each player 201-205. The betting chip of the player who has lost the game is collected by the dealer into the chip tray 30. The dealer pays out the gaming chip 70 from the chip tray 30 for the betting chip of the player who has won the game.

Pillars are provided so as to stand on both sides of the dealer side of the gaming table 10, and cameras 40 and 41 are mounted on each pillar. Angles of view and image taking directions of the two camera 40 and camera 41 provided on the same pillar are different from each other. The camera 40 is used to take an image of the gaming chip 70 placed in the betting area 21 (betting chip), and the camera 41 is used to take an image of the betting chip and the player. In the present embodiment, the angle of view of the camera 41 is larger than that of the camera 40.

The camera 40, 41 takes an image and generate an image. The camera 40 on the right side and the camera 40 on the left side perform taking images such that the entire betting area 21 including the plurality of betting target areas is included in image taking ranges. As a result, the camera 40 generates an image in which a chip stack (betting chip stack) consisting of a stacked plurality of gaming chips 70 is showed in the betting area 21. The camera 41 on the right side and the camera 41 on the left side take images such that the entire betting area 21 and upper bodies of the players positioning at the player positions are included in the image taking ranges. As a result, the camera 41 generates an image in which the player betting the gaming chip 70 in the betting area 21 and the gaming chip 70 being bet are shown.

As shown in FIG. 2, the plurality of betting area distinguished for each player 201-205 is arranged in the longitudinal direction of the gaming table 10, and the plurality of betting target areas is arranged in a direction from the player to the dealer in each betting area distinguished for each player 201-205. That is, the plurality of betting target areas is arranged in a two-dimensional direction on the gaming table 10. The cameras 40 and 41 take images of the betting area 21 in which the betting target areas are arranged in the two-dimensional direction, from diagonally above. Whereby, the betting chip stack of which the image is taken from diagonally above is shown in the image generated by the camera 40, 41.

Since The camera 40, 41 takes an image of the betting chip stack from diagonally above, information of a position of the betting chip stack, information of the side surface (value) of the betting chip included in the betting chip stack, and information of a number of betting chip is included in the image. Therefore, it is possible to, by analyzing this image, recognize the position of the betting chip stack, the type and number of betting chip included therein. That is, if taking an image of the betting chip stack from just side, it is possible to obtain the value and number, but it is unclear which of the betting areas arranged in the two-dimensional direction the betting chip stack is on. If taking an image of the betting chip stack from just above, it is possible to clearly grasp the position of the betting chip stack, but it is possible to recognize only the type of only the topmost betting chip in the betting chip stack, and it is unclear which type of chip is in the betting chip stack and also how many chips of the type is in the betting chip stack.

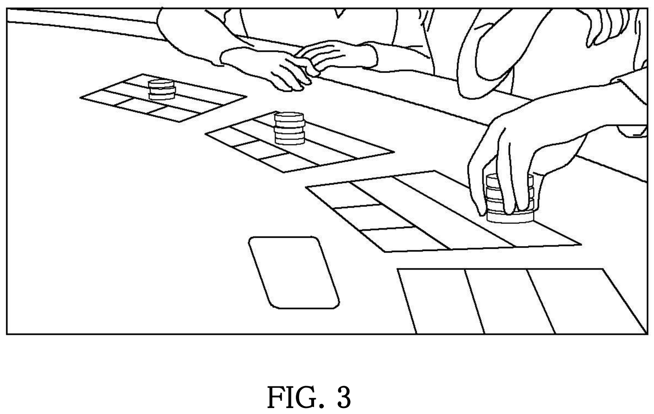

FIG. 3 is a view showing an example of an image taken by the camera according to the embodiment of the present invention. The camera 40 takes an image of the betting chip stack consisting of the one gaming chip or plurality of gaming chips 70 placed (bet) in the betting area 21 of the gaming table 10 to generate an image. The image taking range of the left camera 40 and the image taking range of the right camera 40 overlap each other at least in a part, and the gaming chip 70 placed in the betting area 21 are taken an image from different directions by the left camera 40 and the right camera 40.

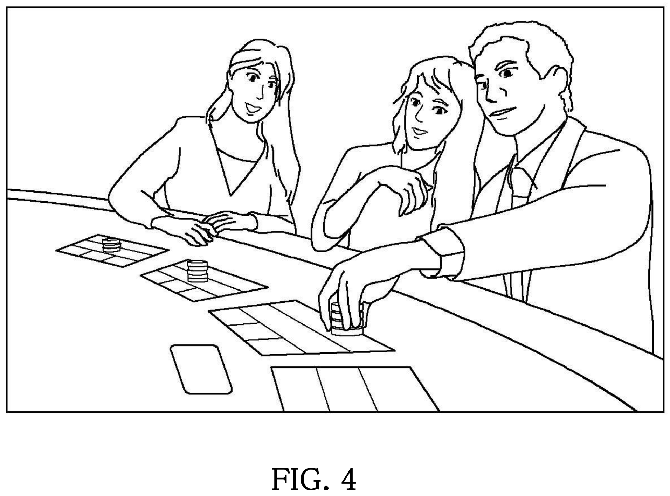

FIG. 4 is a view showing an example of an image taken by the camera according to the embodiment of the present invention. The camera 41 takes an image such that the player playing at the gaming table 10 and the betting chip are included to generate an image. The image taking ranges of the left camera 41 and the right camera 41 overlap each other at least in a part, and the player playing at the gaming table 10 and the gaming chip 70 placed in the betting area 21 are taken an image from the different directions by the left camera 41 and the right camera 41. The camera 41 also takes an image of a back bettor who does not sit at the player position but is standing and bets from behind.

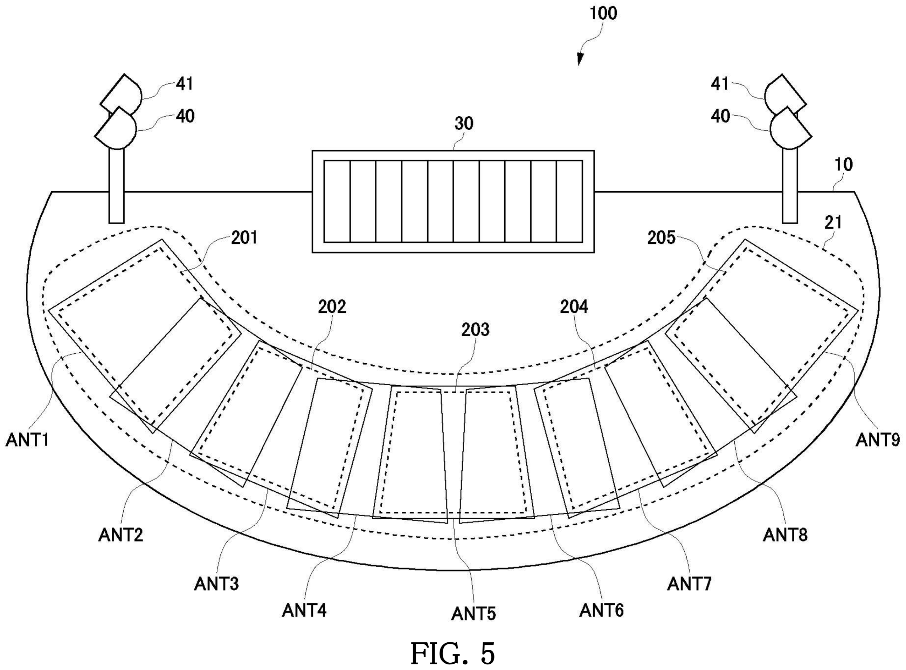

FIG. 5 is a view showing an arrangement of antennas in the gaming table system according to the embodiment of the present invention. Nine antennas of antennas ANT1-ANT9 are arranged in the gaming table 10. The nine antennas ANT1-ANT9 are arranged in sequence side by side in the lateral direction along the betting area 21 extending in the lateral direction. The adjacent antennas overlap each other in a part in the left-right direction, whereby the reading ranges of the adjacent antennas overlap each other. By this arrangement of the nine antennas ANT1-ANT9, the entire betting area 21 is covered, and the RFID tag 72 of the gaming chip 70 in the betting area 21 is read by at least one antenna (in some cases, two or three antennas).

In the example in FIG. 5, the antennas ANT1, ANT3, ANT5, ANT7, and ANT9 correspond to the betting areas distinguished for each player 201-205, respectively, and the antennas ANT2, ANT4, ANT6, and ANT8 are arranged midway between those antennas. The size of each antenna ANT1-ANT9 is approximately the same as the size of the betting area distinguished for each player 201-205. However, the size and arrangement of the antenna ANT1-ANT9 may not correspond to the betting area distinguished for each player 201-205.

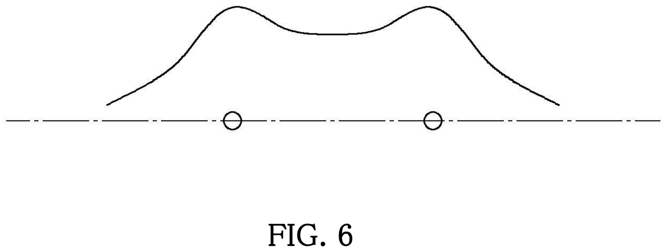

FIG. 6 is a view showing an intensity distribution of electromagnetic wave formed by one antenna according to the embodiment of the present invention. FIG. 6 is a view of a loop formed by the antenna by viewing in the planer direction. For the electromagnetic wave, an intensity thereof become strong on a line member of the antenna, slightly weak toward the center inside the loop, and weaker as it becomes more away from the antenna outside the loop. This intensity of the electromagnetic wave is considered to be roughly proportional to a reading capacity by the antenna.

In the present embodiment, such antennas are arranged overlapping each other as shown in FIG. 5. If the plurality of antennas ANT1-ANT9 performs reading simultaneously, i.e., output the electromagnetic waves having the intensity distribution as shown in FIG. 6, the electromagnetic waves interfere with each other. Therefore, in the present embodiment, the antennas ANT1-ANT9 are controlled such that they do not perform readings at the same time at least for the antennas which interfere with each other.

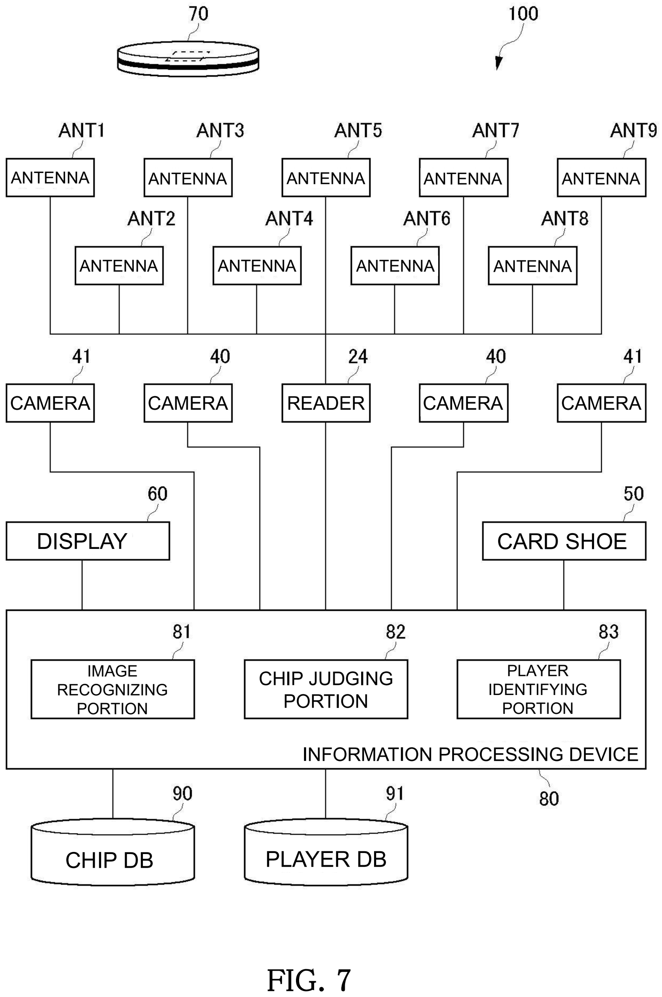

FIG. 7 is a block diagram showing a configuration of the gaming table system according to the embodiment of the present invention. The gaming table system 100 includes the plurality of antennas ANT1-ANT9, a reader 24, the plurality of cameras 40 and 41, the card shoe 50, the display 60, an information processing device 80, a chip database 90, and a player database 91. The antennas ANT1-ANT9 are connected to the reader 24, and the reader 24, camera 40, 41, card shoe 50, display 60, chip database 90, and player database 91 are connected to the information processing device 80. The information processing device 80 consists of a computer including an arithmetic processing device and a memory device. The information processing device 80 reads and executes a program stored in a non-transitory computer readable medium and thereby functioning as an image recognizing portion 81, a chip judging portion 82, and a player identifying portion 83.

The chip database 90 stores, for each gaming chip 70, chip identifying information (chip ID), a type (value), a date of manufacture, information for identifying a casino etc. in which it is scheduled to be used, an activation status (valid, invalid, etc.), and information of a history of a possessor. The player database 91 stores, for each player, player identifying information (player ID), player personal information (a face photo, name, nationality, contact information, etc.), a betting history, and a status information (a VIP, an attention required, etc.).

The card shoe 50 stores a game result judging algorithm based on rules of baccarat, and applies a reading result of reading the ranks of the playing cards to be drawn to the game result judging algorithm, thereby judging a game result (player win, banker win, tie, player pair, banker pair, etc.). The card shoe 50 includes a display not shown, and displays the reading result and game result on the display. The card shoe 50 further includes a game start button which is operated in order to cancel the display of the game result and start a next game.

It is also possible to recognize a progression stage of a game by using the card shoe 50. That is, the card shoe 50 can recognize that a betting stage of a next game starts when detecting that the game start button is pushed. The card shoe 50 can recognize that the betting stage ends and a card dealing stage starts when detecting that a playing card is drawn first after the game start button is pushed. Moreover, it can recognize that the card dealing stage ends and a settlement stage starts when judging a game result from a reading result of a drawn playing card. Furthermore, it can recognize that the settlement stage ends and a betting stage of a next game starts when detecting that the game start button is pushed. The card shoe 50 reports these recognized game progression stages to the information processing device 80.

The reader 24 controls the reading of the plurality of antennas ANT1-ANT9. The reader 24 causes the antenna selected among the antennas ANT1-ANT9 output the electromagnetic wave, receives a reading signal of the RFID tag 72 from the antenna, and outputs a reading result to the information processing device 80. At this time, the reader 24 transmits a radio wave to the RFID tag 72 of the gaming chip 70 via the antennas ANT1-ANT9 and receives a received signal strength indicator (RSSI) as well as the information stored in the RFID tag 72 as the reading result. The reader 24 sequentially switches the antennas caused to read, whereby the reading results of the antennas ANT1-ANT9 are sequentially obtained. The plurality of antennas ANT1-ANT9 and the reader 24 constitute a reading means for the RFID tag 72 on the gaming table 10.

The camera 40, 41 outputs the image obtained by taking an image to the information processing device 80. The image recognizing portion 81 analyzes the image from the camera 40, thereby recognizing the position of the betting chip stack, the type and number of gaming chip 70 included in the betting chip stack. For this purpose, the image recognizing portion 81 uses a convolutional neural network having a deep learning structure to recognize the betting chip stack from the image from the camera 40, and further recognize the gaming chip 70 from the recognized betting chip stack.

Since the images are generated by the left and right cameras 40 respectively, the image recognizing portion 81 analyzes the respective images, whereby the same gaming chips 70 are basically recognized from both images. However, there may be a gaming chip 70 hidden by another betting chip stack in the image of the one camera 40, and the hidden gaming chip 70 may be shown in the image of the other camera 40. In such case, the gaming chip 70 not recognized from the image of the one camera 40 may be recognized from the image of the other camera 40. The image recognizing portion 81 combines the results of the image recognition from these images of the left and right cameras 40, thereby finally recognizing the gaming chip 70 bet on the gaming table 10.

The image recognizing portion 81 also analyzes the images from the camera 41, thereby recognizing (detecting) the betting chip stack. Furthermore, the image recognizing portion 81 associates the betting chip stack recognized from the image from the camera 41 and the betting chip stack recognized from the image from the camera 40 with each other. As described below, the bet chip stack recognized from the image from the camera 41 is associated with the player identified by the player identifying portion 83, and so the bet chip stack recognized from the image from the camera 40 is finally associated with the player identified by the player identifying portion 83, thereby recognizing which player bets and also what betting the player performs.

The player identifying portion 83 analyzes the image from camera 41, thereby recognizing left and right shoulders, left and right elbows, left and right wrists, left and right eyes, left and right ears, and nose of the player to generate a skeletal model of the player. The player identifying portion 83 also extracts a face area of the player from the image from the camera 41 and performing image recognition on it, thereby identifying player identifying information (player ID) for uniquely identifying the player. The player has registered a face image of the player in advance, thereby enabling this type of player identification.

The player identifying portion 83 uses each convolutional neural network including a deep learning structure for such generating of the skeletal model and identifying of the player by the face image. For a player who has not registered in advance, the player identifying portion 83 judge that the player is an unknown player or guest.

The chip judging portion 82 estimates which antenna of the plurality of antennas ANT1-ANT9 within the betting area on which the gaming chip 70 is placed the gaming chip 70 is placed on a region corresponding to the reading range of and also where region within the reading range of the corresponding antenna the gaming chip is placed on, based on the reading result of the RFID tag 72 by each of the plurality of antennas ANT1-ANT9. Furthermore, the chip judging portion 82 associates the betting chip stack recognized by the image recognizing portion 81 and the reading result of the RFID tag 72 by the antennas ANT1-ANT9 with each other based on this estimating result and the recognizing result of the betting chip stack by the image recognizing portion 81.

As described above, the reading ranges of the antennas ANT1-ANT9 adjacent to each other overlap each other, and, due to this, the betting area 201-205 includes an area where the RFID tag 72 of the gaming chip 70 placed thereon is read by the plurality of antennas ANT1-ANT9. For example, a gaming chip 70 placed on an area where the antenna ANT1 and antenna ANT2 overlap with each other is read by the antenna ANT1 and antenna ANT2. For example, a gaming chip 70 placed between the antenna ANT1 and antenna ANT3 is read by the antenna ANT1, antenna ANT2, and antenna ANT3. The chip judging portion 82 estimates a region smaller than the reading range of the plurality of antennas ANT1-ANT9 as a region on which the gaming chip 70 is placed based on a combination of the reading results of the plurality of antennas ANT1-ANT9.

The chip judging portion 82 judges a chip stack including an illicit gaming chip not having a normal RFID tag 72 among the chip stacks recognized by the image recognition, based on the reading result of the RFID tag 72 and the image recognition result by the image recognizing portion 81. The gaming chip 70 including no RFID tag 72 and the gaming chip 70 including a faulty RFID tag 72 are both judged to be the gaming chips 70 not including normal RFID tags 72. The chip judging portion 82 judges that there is an illicit gaming chip when there is an inconsistency between the reading result of the RFID tag 72 and the image recognition result by the image recognizing portion 81. More specifically, the chip judging portion 82 judges that there is an illicit gaming chip 70 when there is a gaming chip 70 which is recognized by the image recognition but not included in the reading result of the RFID tag 72.

Specifically, the chip judging portion 82 judges, when a number of gaming chip 70 whose placed region is estimated based on the reading result of the RFID tag 72 is less than a number of gaming chip 70 recognized to be placed within the region, that the betting chip stack includes the illicit gaming chip of which there is an illicitness in the RFID tag 72. Conversely, the chip judging portion 82 judges, when a number of gaming chip 70 whose placed region is estimated based on the reading result of the RFID tag 72 is more than a number of gaming chip 70 recognized to be placed within the region, that the gaming chip which is in a blind spot of the camera 40 and not recognized by the image recognizing portion 81 is included within the region.

When the game progression state is in the betting stage, the information processing device 80 controls the reader 24 to cause it to repeatedly perform the reading of the RFID tag 72 of the gaming chip 70. At this time, the reader 24 causes the antennas ANT1-ANT9 to perform in sequence the reading as described above. When the game progression state is in the betting stage, the information processing device 80 controls the camera 40 to causes it to continuously take an image to continuously acquire images from the camera 40. The image recognizing portion 81 performs sequential analyses on the images continuously sent from the camera 40 to recognize the gaming chip 70. In this way, the chip judging portion 82 associates the betting chip stack recognized by the image recognizing portion 81 and the reading result of the RFID tag 72 with each other based on the result of the image recognition and the reading result of the RFID tag 72 at a timing when a betting chip stack is newly placed on the betting area 21. That is, in the betting stage, the reading of the RFID tag 72 by the reader 24 and the recognizing of the gaming chip 70 by the image recognition are performed in real time. Whereby, it is possible to detect the illicit gaming chip in the betting stage, and find the illicit gaming chip before entering the card dealing stage.

However, immediately after a player places the gaming chip 70 on the gaming table 10, a situation may arise in which the gaming chip 70 is hidden by a hand of the player and the RFID tag 72 is recognized but the corresponding gaming chip 70 is not recognized from the image. For example, in the situation shown in FIG. 4, for the gaming chips 70 which the man is betting, the gaming chips 70 cannot be detected by the image recognition, but the RFID tags 72 of those gaming chips 70 may be read. However, even in such case, the man will eventually place the gaming chips 70 on the betting area 21 and remove his hand from the gaming chips 70. Therefore, the chip judging portion 82 may not immediately judge that there is an illicit gaming chip when finding an inconsistency between the image recognition result and the reading result of the RFID tag, but judge that there is an illicit gaming chip when such inconsistency continues for a predetermined time (e.g., 3 seconds).

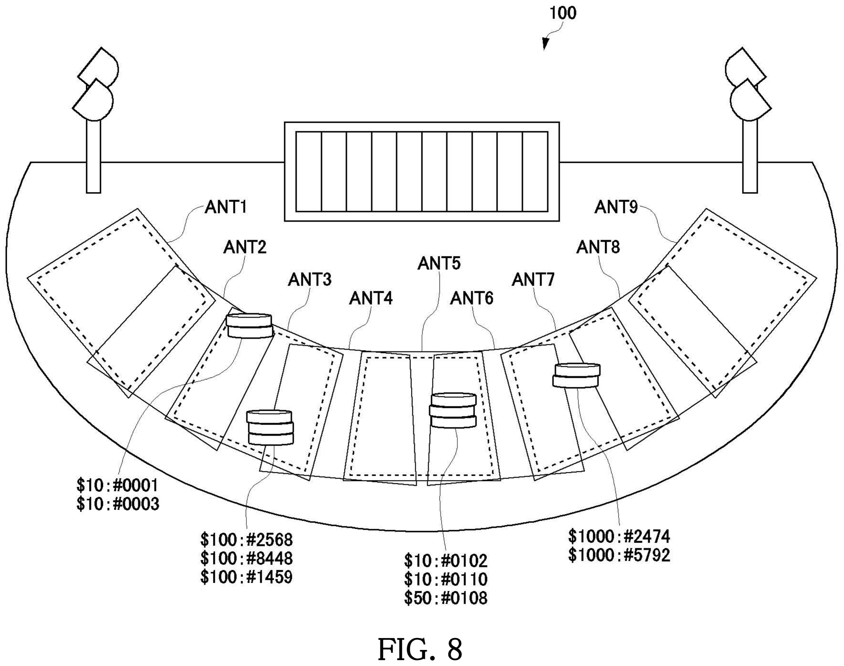

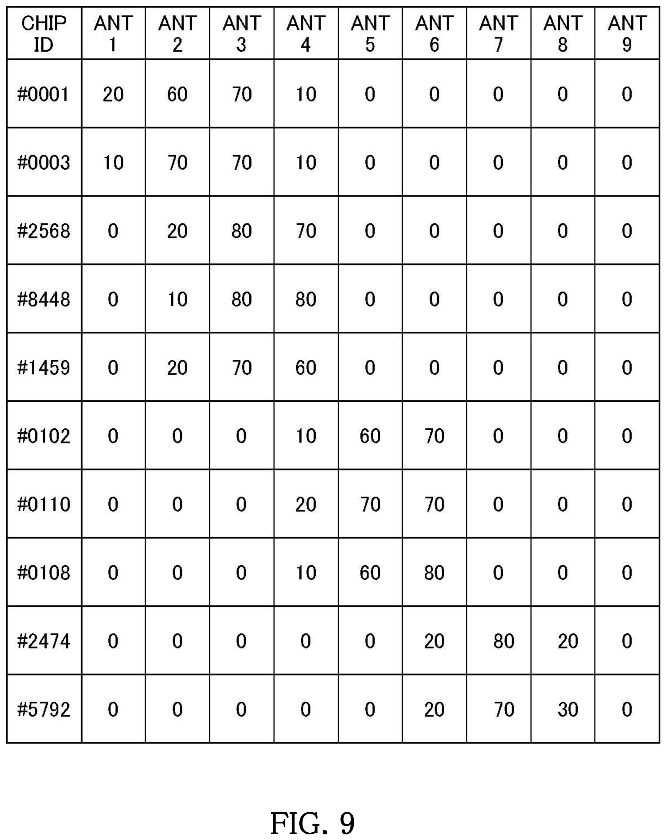

FIG. 8 is a view showing a relationship between the antenna and the gaming chip in the gaming table according to the embodiment of the present invention. FIG. 9 is a table showing a reading result of the RFID tag in the case of FIG. 8. FIG. 8 shows a type ($) and chip identifying information (#) of each gaming chip 70, and FIG. 9 shows a received signal strength indicator (RSSI) of each antenna ANT1-ANT9 for a chip identifying information of each gaming chip 70 in a range of 0 to 100.

The chip judging portion 82 estimates a small region in the betting area 21 on which each gaming chip 70 is placed based on the reading result of the antennas ANT1-ANT9. Since the reading range of each antenna ANT1-ANT9 overlaps, this small region is smaller than the reading range of the one antenna. Since the reading range of each antenna ANT1-ANT9 overlaps, the one gaming chip 70 is read by a plurality of antennas. The chip judging portion 82 estimates, for each gaming chip 70, the small region in which the gaming chip 70 positions based on the reading intensity of each antenna ANT1-ANT9.

As shown in FIG. 9, even for a plurality of gaming chips 70 in the same position, the signal strengths are not necessarily the same. In this way, the received signal strength indicator of the RFID tag 72 has ambiguity. Moreover, as shown in FIG. 6, the intensity distribution of the electromagnetic wave of each antenna ANT1-ANT9 has a complex shape. Therefore, it is difficult to determine where the gaming chip 70 is based on only the received signal strength indicator of the RFID tag 72. However, the chip identifying information read from the RFID tag 72 does not have such uncertainty, and as long as the gaming chip 70 has the normal RFID tag 72, reading contents is accurate.

The chip judging portion 82 estimates, for each gaming chip 70, a possibility of presence in each small region in the range of 0 to 100 based on the received signal strength indicator of each antenna ANT1-ANT9. For the chip judging portion 82, an operation formula or table for finding the possibility of the presence in each small region based on the received signal strength indicator of each antenna ANT1-ANT9. The chip judging portion 82 applies an actual received signal strength indicator of each gaming chip 70 to this operation formula or table, thereby finding the possibility of the presence in each small region.

The chip judging portion 82 similarly estimates, for each gaming chip 70, a possibility of presence in each betting area distinguished for each player 201-205 in the range of 0 to 100 based on the received signal strength indicator of each antenna ANT1-ANT9. For the chip judging portion 82, a calculation formula or table for finding the possibility of the presence in each betting area distinguished for each player 201-205 based on the received signal strength indicator of each antenna ANT1-ANT9. The chip judging portion 82 applies the actual received signal strength indicator of each gaming chip 70 to this calculation formula or table, thereby finding the possibility of the presence in each betting area distinguished for each player 201-205.

In this way, by the reading result of the RFID tag 72 alone, it is only possible to finding, with possibility, which small region or betting area distinguished for each player 201-205 each gaming chip 70 presents on, and it is impossible to determine those. On the other hand, the image recognizing portion 81 can recognize the position of each betting chip stack and the type and number of gaming chip 70 included in the betting chip stack, as described above. Therefore, the chip judging portion 82 associates each gaming chip 70 whose RFID tag 72 is read (each chip identifying information in the reading result) with the betting chip stack obtained as the result of the image recognition.

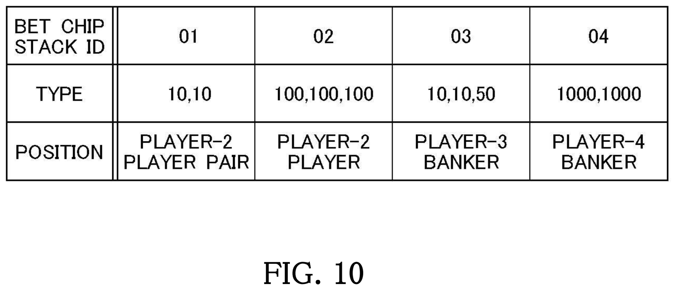

FIG. 10 is a table showing an example of betting chip stacks recognized by the image recognizing portion according to the embodiment of the present invention. The image recognizing portion 81 assigns an ID to each recognized betting chip stack, and recognizes, for each betting chip stack, the type (value) and position (player position, betting target area) of the gaming chip 70 included therein.

The chip judging portion 82 assigns the reading result of the RFID tag 72 to one of the betting chip stacks obtained from the image recognition based on the reading result of the RFID tag 72 shown in FIG. 9 and the image recognition result shown in FIG. 10. Since the betting area distinguished for each player 201-205 and the betting target area on which each betting chip stack is placed are judged by the result of the image recognition, the chip judging portion 82 assigns the reading result of the RFID tag 72 (chip identifying information, type (value), etc.) to the betting area distinguished for each player 201-205 and the betting target area.

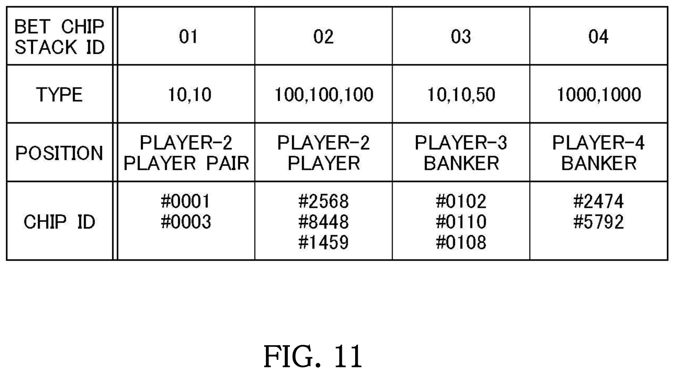

FIG. 11 is a table showing a result of judging by the chip judging portion according to the embodiment of the present invention. The chip judging portion 82 judges which betting chip stack each gaming chip 70 presents in to the extent that the possibility of the presence in each small region based on the reading result of the RFID tag 72 is not less than a predetermined standard value (threshold value). The chip judging portion 82 judges, when a number of RFID tag 72 (chip identifying information) assigned to a betting chip stack within the range of the threshold value based on the reading result of the RFID tag 72 does not match a number of gaming chip 70 included in each betting chip stack recognized by the image recognition, that an illicit gaming chip presents in such betting chip stack. Conversely, the chip judging portion 82 may judge, when judging which betting chip stack each gaming chip 70 presents in so as to be consistent with the number of chip of each betting chip stack in the image recognition result, and a possibility based on the reading result of the RFID tag 72 is lower than the threshold value by such judging, that an illicit gaming chip presents in the betting chip stack having such reading result of the RFID tag 72.

In the example of FIG. 11, the chip judging portion 82 judges, when the number of RFID tag 72 (chip identifying information) assigned to the betting chip stack within the range of the threshold value based on the reading result of the RFID tag 72 does not match the number of gaming chip 70 included in each betting chip stack recognized by the image recognition, that the illicit gaming chip presents in such betting chip stack, and does not consider the type of gaming chip 70, but the chip judging portion 82 judges which betting chip stack each gaming chip 70 presents in by also considering the type of gaming chip 70. That is, as described above, the RFID tag 72 built in the gaming chip 70 stores information for identifying the type of gaming chip 70 (type identifying information), and the center line 71 on the side surface of the gaming chip 70 also represents the type of the gaming chip 70, and the image recognizing portion 81 identifies the type of gaming chip 70 based on this center line 71.

Therefore, the chip judging portion 82 may further assign the read RFID tag 72 (chip identifying information) to one of the betting chip stacks recognized by the image recognizing portion 81 such that the number of RFID tag 72 assigned to the betting chip stack and the number of gaming chip 70 included in each betting chip stack recognized by the image recognizing portion 81 match each other within the range of the threshold value for each type based on the type of gaming chip 70 identified based on the reading result of the RFID tag 72 and the type of gaming chip 70 recognized by the image recognizing portion 81. Then, the chip judging portion 82 judges, when there is a betting chip stack in which the numbers of chip do not match each other, that the betting chip stack is a betting chip stack including an illicit gaming chip. That is, even when it is impossible to uniquely identify the betting area distinguished for each player 201-205 on which the gaming chip 70 is placed from the reading result of the RFID tag 72 when judging only by the number of chips without considering the type, it may possible to identify which betting chip stack the information of the RFID tag 72 read by the reader 24 presents in by considering the type. Therefore, the chip judging portion 82 may take into consideration the information of the type in the reading result of the RFID tag 72 and the information of the type recognized by the image recognizing portion 81, and assign the read RFID tag 72 (chip identifying information) to one of the betting chip stacks recognized by the image recognizing portion 81.

The chip judging portion 82 may first compare the number of gaming chip 70 indicated by the reading result of the RFID tag 72 and the number of gaming chip 70 recognized by the image recognizing portion 81 for the entire betting area 21 before performing the above processing, and, when both do not match, perform the processing associating the information obtained by the reading of the RFID tag 72 with the betting chip stack recognized by the image recognition, as described above, thereby identifying which betting chip stack such inconsistency occurs in. On the other words, the chip judging portion 82 may omit the above processing when the number of gaming chip 70 indicated by the reading of the RFID tag 72 and the number of gaming chip 70 recognized by the image recognizing portion 81 match with each other in the entire betting area 21.

In the case where the image recognition result and the reading result of the RFID tag 72 are inconsistent with each other, it may impossible to uniquely identify the betting area distinguished for each player in which such inconsistency occurs and only possible to narrow down two betting area distinguished for each player. In this case, the chip judging portion 82 judges that there is a possibility that an illicit gaming chip is included for the two identified betting chip stacks. That is, the chip judging portion 82 judges, when the chip judging portion 82 cannot uniquely identify the betting chip stack including an illicit gaming chip, that the plurality of betting chip stacks whose possibility of including the illicit gaming chip is greater than a threshold value is the betting chip stack including the illicit gaming chip.

As described above, the image recognizing portion 81 recognizes, for each gaming chip 70, the type thereof. Therefore, the chip judging portion 82 may judge, for each small region, when the type and number of gaming chip 70 indicated by the reading result of the RFID tag 72 are different from the type and number of gaming chip 70 of the betting chip stack recognized by the image recognizing portion 81, that such betting chip stack includes an illicit gaming chip.

The chip judging portion 82 identifies, when judging that there is an illicit gaming chip, a player betting the illicit gaming chip using information of the player identified by the player identifying portion 83. For this purpose, the chip judging portion 82 associates the betting chip stack of which taken an image by the camera 41 with the player identified by the player identifying portion 83. That is, the chip judging portion 82 identifies the player placing the betting chip stack in the betting area 21.

For this purpose, the image recognizing portion 81 extracts the stack of the gaming chip 70 (betting chip stack) from the image taken by the camera 41 when the betting stage ends (i.e., when the bet is fixed). Then, the chip judging portion 82 identifies an image (frame) in which the betting chip stack is recognized for the first time at the extraction position of the betting chip stack among a continuous plurality of images (frames) obtained by continuously taking images by the camera 41 in the betting stage. The chip judging portion 82 identifies a player whose wrist is closest to the bet chip stack in this image (frame) as a player who has bet the bet chip stack.

If associating the player whose wrist is closest to a gaming chip 70 with the gaming chip 70 at each time when the gaming chip 70 is recognized in the betting stage, it is necessary to always perform the processing of associating the gaming chip 70 and the player in the betting stage, not only a processing load increases, but also confusion occurs when the player changes the bet in the betting stage (which is legal in itself). In contrast, by the method according to the present embodiment, it is possible to associate finally the betting chip stack with the player, it is not necessary to always associate the betting chip with the player in the betting stage, and it is possible to reduce a processing load.

In this way, the chip judging portion 82 associates the betting chip stack with the player who has bet the betting chip stack, that is, identifies the player who has bet the chip stack, and so, when the betting chip stack includes an illicit gaming chip, can identify the player who has bet the betting chip stack including such illicit gaming chip.

Moreover, since the position of the betting chip stack and the type and number of gaming chip 70 included in the betting chip stack are recognized from the image from the camera 40, the player, the position of the betting chip stack bet by the player, and the type and number of gaming chip 70 included in the betting chip stack are recognized by the chip judging portion 82. Since the type of gaming chip 70 corresponds to the value thereof, as described above, the chip judging portion 82 further calculates, for each betting chip stack, an amount of betting chip stack based on the type and number of gaming chip 70 included therein. Then, the information processing device 80 records this amount of bet chip stack in the player database 91 or updates the record in the player database 91, as a betting amount of the player.

Moreover, the type of gaming chip 70 can be identified from its appearance, as mentioned above, but the information uniquely identifying the gaming chip 70 cannot be obtained from its appearance. That is, it is impossible to obtain the chip identifying information of the gaming chip 70 even by analyzing the image obtained by taking an image of the gaming chip 70. On the other hand, as described above, the RFID tag 72 stores the chip identifying information. Therefore, the chip judging portion 82 associates the reading result of the RFID tag 72 and the result of image recognition with each other, whereby judging which chip stack in the image the gaming chip 70 including chip identifying information is included in and also which chip identifying information the gaming chip 70 included in the chip stack in the image includes. The information processing device 80 judges, for each betting chip stack, the chip identifying information of the gaming chip 70 included therein, and then queries the chip database 90 using the chip identifying information to obtain information of the gaming chip 70 from the chip database 90. Then, for example, the information processing device 80 judges whether an activation information is valid in the chip database 90 for the queried chip identifying information.

The display 60 displays the various results of the information processing by the information processing device 80. In particular, the display 60 may display the number of gaming chip 70 in each betting area distinguished for each player 201-205 based on the image recognition as shown in FIG. 10 and the number of gaming chip 70 in each betting area distinguished for each player 201-205 finally judged by the chip judging portion 82 considering the reading result of the RFID tag 72 in a comparable method, and, If there is a betting chip stack including an illicit gaming chip, an error indication is displayed for each betting area distinguished for each player 201-205 on which the betting chip stack is located. This error indication serves as an alert to the dealer, and the display 60 serves as an alert device at this time.

The information processing device 80 also cause, when there is a problem in the result of quiring the chip database 90 for the chip identifying information read from the RFID tag 72 (e.g., when the activation information is "invalid"), the display 60 to perform an error indication in accordance with the problem.

The display 60 may also display, for each betting area distinguished for each player 201-205, information identifying the player who has bet the gaming chip 70 thereon (e.g., a name of the player), together with the above.

As described above, by the gaming table system 100 according to the present embodiment, it is possible to recognize the gaming chip 70 from the image obtained by taking an image by the camera 40 and assign (map) the reading result of the RFID tag 72 to the recognition result, whereby judging a betting chip stack including a illicit gaming chip including no normal RFID tag 72.

### (Variant example 1)

In the above embodiment, the gaming chip 70 not including the normal RFID tag 72 is defined as the illicit gaming chip, and the betting chip stack including the illicit gaming chip is identified. The illicit gaming chip is not limited to this, and the gaming table system 100 may consider a gaming chip 70 related to an illicit bet to be the illicit gaming chip, and judge a presence of the illicit gaming chip. Specifically, the chip judging portion 82 may a gaming chip 70 related to capping (late betting) of adding a betting chip which is fixed to win or likely to win after the card dealing stage has started, or pinching of removing a betting chip which is fixed or likely to lose after the card dealing stage has started, and judge a presence of a betting chip stack including such illicit gaming chip.

In order to detect such illicit gaming chip, the image recognizing portion 81 recognizes a position of a betting chip stack of a gaming chip 70 and a type and number of gaming chip 70 in the betting chip stack for images obtained by taking images at a first timing and a subsequent second timing, respectively. The information processing device 80 also acquires reading results of the RFID tag 72 by each of the plurality of antennas ANT1-ANT9 at the first timing and at the second timing by the reader 24.

Then, the chip judging portion 82 judges a betting chip stack including an illicit gaming chip among the betting chip stacks recognized by the image recognizing portion 81 based on the reading result of the RFID tag 72 at each of the first and second timings and the recognizing result of the betting chip stack by the image recognizing portion 81 for the image at each of the first and second timings. Specifically, the chip judging portion 82 judges the type and number of gaming chip 70 included in the betting chip stack in each betting area distinguished for each player 201-205 based on the reading result of the RFID tag 72 at the first timing and the image recognition result at the first timing and judges the type and number of gaming chip 70 included in the betting chip stack in each betting area distinguished for each player 201-205 based on the reading result of the RFID tag 72 at the second timing and the image recognition result at the second timing, and judges that the illicit gaming chip presents when there is an inconsistency between those judged types and numbers.

More specifically, the chip judging portion 82 judges that an illicit gaming chip related to the illicitness of the capping is included, for a betting chip stack in which the gaming chips 70 is more in the second timing than in the first timing, and judges that an illicit gaming chip related to the illicitness of the pinching, for a betting chip stack in which the gaming chip included is fewer in the second timing than in the first timing.

In particular, when the first timing is the end of the betting stage (i.e., the start of the card dealing stage) and the second timing is the end of the card dealing stage (i.e., the start of the settlement stage), it is possible to find an illicit of increasing or decreasing the betting chip in the card dealing stage in which it is not permitted that a player increases or decreases the betting chip. The first timing and second timing are not limited to these examples, and the first timing and second timing may be the start and end of any period in which it is prohibited to increase or decrease the betting chip.

### (Variant example 2)

As described above, in the gaming table system 100, in order to identify the betting chip stack including the illicit gaming chip and identify the player who has bet such betting chip stack, the chip judging portion 82 associates the gaming chip 70 included in the betting chip stack recognized by the image recognizing portion 81 and the player identified by the player identifying portion 83 with each other. The chip judging portion 82 also judges the amount of betting chip (betting amount) from the type and number of gaming chip 70 in each betting chip stack. The information processing device 80 stores the betting amount of the player in the player database 91 or updates an accumulated betting amount of the player in the player database 91 based on the betting amount of the player.

As described above, the information processing device 80 associates the information read from the RFID tag 72 with each betting chip stack, and the betting area distinguished for each player 201-205 and betting target area in which the betting chip stack has been bet. The gaming table system 100 may further judge a winning amount and losing amount for each player by using information of the game result from the card shoe 50, and store them together with the betting amount in association with the player identifying information in the player database 91.

Furthermore, as described above, since the RFID tag 72 of the gaming chip 70 stores the chip identifying information uniquely identifying the gaming chip 70, it may be also possible to associate this chip identifying information to the player identifying information. By storing the chip identifying information in the chip database 90 in association with the player identifying information, the information processing device 80 can grasp which gaming chip 70 each player possesses.

In this case, it is possible to find a situation in which, for a gaming chip 70 bet at the gaming table 10, a player who has bet the gaming chip 70 does not match a player stored as the most recent possessor of the gaming chip 70 in the chip database 90. Moreover, for example, it is possible to find a situation in which, when converting a gaming chip 70 possessed by a player into cash in a cashier, a player stored as the most recent possessor of the gaming chip 70 in the chip database 90 and the player requesting such conversion into cash do not match each other. The gaming table system 100 may include an alert device configured to output an alert when detecting such inconsistency. The display 60 may be used as an alert device when detecting such inconsistency in the gaming table 10. Whereby, it is possible to detect an illicit activity such as money laundering, theft, etc. .

### (Variant example 3)

In the above embodiment, the gaming table system 100 repeatedly reads the RFID tag 72 of the gaming chip 70 in the betting area 21 in the betting stage, the cameras 40 and 41 also continuously take images and sequentially output the images to the information processing device 80 in the betting stage, the image recognizing portion 81 recognizes the position of the betting chip stack and the type and number of gaming chip 70 included in the betting chip stack on the image sent from the cameras 40 and 41, the chip judging portion 82 assigns the reading result of the RFID tag 72 to the betting chip stack based on the reading result of the RFID tag 72 and the image recognition result, and, as a result, when there is an illicitness, it identifies the betting chip stack including the illicit gaming chip.

That is, the gaming table system 100 detects the illicit gaming chip and outputs the alert using the display 60 in real time in the betting stage. Whereby, it is possible to detect the illicit gaming chip not including the normal RFID tag 72 before the card dealing starts, and avoid implementing a game using the illicit gaming chip.

However, not limited to this, the gaming table system 100 may perform the above detection of the illicit gaming chip at the time point when the betting stage ends, i.e., at the time point when contents of the betting are fixed (No More Bet) and the card dealing stage starts.

Furthermore, in the above embodiment, the gaming table system 100 judge which betting chip stack the chip identifying information read from the RFID tag 72 presents in based on the image recognition result and the reading result of the RFID tag 72 for the betting chip, but may perform a similar processing on the payout gaming chip paid out by the dealer to the player who has won the game. Whereby, the information processing device 80 can not only judge whether the paid-out gaming chip includes an illicit gaming chip and which player the paid-out gaming chip has been paid out to, as similar to the above embodiment, but also judge whether the paid-out amount is correct by grasping an amount of paid-out gaming chip and bringing it together with the betting amount and game result, and further judge which chip identifying information the gaming chip 70 possessed by a player having player identifying information includes and also which player identifying information the player possessing the gaming chip 70 having the chip identifying information includes.

### (Variant example 4)

Moreover, in the above embodiment, the plurality of antennas ANT1-ANT9 returns the received signal strength indicator for each RFID tag 72 to the reader 24, and the chip judging portion 82 estimate which small region the gaming chip 70 read by the plurality of antennas ANT1-ANT9 positions on using the information of the received signal strength indicator, but the RFID tag 72 may not transmit the received signal strength indicator to the reader 24, and simply transmit the information stored in the RFID tag 72 or a part thereof to the reader 24. In this case, instead of FIG. 9, a table including whether or not it can be read (1 or 0) is obtained as a value indicating the reading result of each antenna ANT1-ANT9.

Even in this case, the chip judging portion 82 assigns the information read from the RFID tag 72 to one of the image-recognized betting chip stacks based on the reading result of the RFID tag 72 by each antenna ANT1-ANT9.

### (Variant example 5)

In the above embodiment, in the betting area 21, the betting areas distinguished for players 201-205 are arranged side by side in the direction in which the player positions are arranged side by side (lateral direction), and the antennas ANT1-ANT9 are also arranged side by side in the lateral direction. In addition to or instead of this, a plurality of antennas may be arranged in line in the direction from the player to the dealer (longitudinal direction), whereby estimating which of small regions divided in the longitudinal direction the gaming chip 70 whose RFID tag 72 is read is on, based on the reading result of the RFID tag 72 by those plurality of antennas.

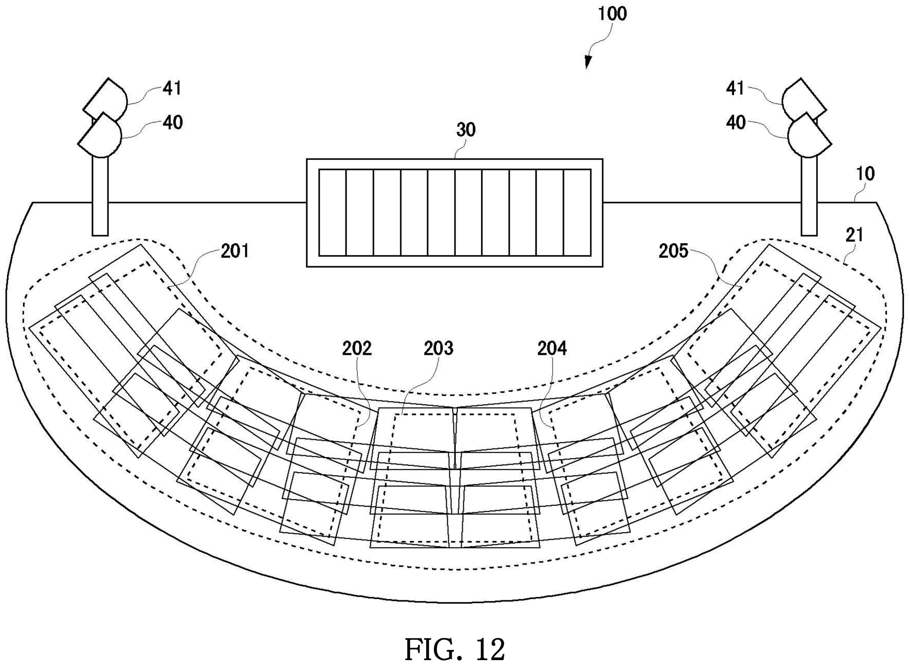

FIG. 12 is a view showing a variant example of the arrangement of the antennas in the gaming table system according to the embodiment of the present invention. In the example in FIG. 12, in the betting area 21, nine antennas are arranged so as to overlap each other in the lateral direction as in the above embodiment, and three antennas are also arranged so as to overlap each other in the longitudinal direction.

In the above embodiment and in this variant example in FIG. 12, the plurality of antennas is arranged such that the adjacent antennas (loops formed thereby) overlap each other, but it is not necessary that the loops formed by the antennas overlap each other, and it is sufficient that the reading ranges of respective antennas overlap each other. Whereby, it is ensured that, for a gaming chip 70 placed at any position in the betting area 21, its RFID tag 72 can be read by any of the antennas.

In this case, the chip judging portion 82 can assign the information read from the RFID tag 72 to the betting chip stack recognized by the image recognition based on the reading result of the RFID tag 72 obtained so as to be distinguished in the longitudinal direction and lateral direction.

### (Variant example 6)

In the above embodiment, the information processing device 80 includes the image recognizing portion 81, the chip judging portion 82, and the player identifying portion 83, but these respective portions may be provided in separate devices. In this case, the respective devices may be able to communicate via a network. For example, the image recognizing portion 81 may be provided in a device of the casino, and the chip judging portion 82 and the player identifying portion 83 may be provided in a device in the cloud which can communicate with the device of the casino.

### (Variant example 7)

The chip judging portion 82 may recognize a plurality of gaming chips 70 whose RFID tags 72 are read at the same timing by the same antenna as one chip stack or one group of chip stacks, and a plurality of gaming chips 70 whose RFID tags 72 are read at a different timing by the same antenna as other chip stack or other group of chip stacks different from the one chip stack or one group of chip stacks. In particular, for a betting chip bet, a plurality of betting chips read at the same time by the same antenna may be recognized to be what has been bet by the same player.

### (Variant example 8)

The information processing device 80 of the gaming table system 100 may further comprise a possessor identifying portion configured to identify a possessor of a gaming chip 70 based on the reading result of a RFID tag 72 of the gaming chip 70. In this case, the chip judging portion 82 recognizes a plurality of gaming chips 70 identified to be possessed by the same possessor among a plurality of gaming chips 70 placed on the same estimated region as a single chip stack. The possessor identifying portion identifies a possessor of the gaming chip 70 by referring to the chip database 90 based on chip identification information (chip ID) read from the RFID tag 72 of the gaming chip 70.

The information processing device 80 of the gaming table system 100 may further a possessor updating portion configured to rewrite possessor information of a gaming chip paid out by a dealer for a gaming chip which has won a game as a result of a game using the gaming chip over possessor information of the gaming chip which has won the game. Whereby, for the gaming chip 70 paid out to the player by the dealer, the possessor information is properly updated.

### (Variant example 9)

In the above embodiment, the gaming table system 100 configured to recognize the gaming chip 70 on the gaming table is described, but the present invention can be also applied more widely to a common article. That is, the present invention can be applied to a system configured to read on a predetermined location an article in which an RFID tag is built. In this case, a plurality of divided areas arranged so as to be close to or contact with each other is arranged on the predetermined location in which the reading is performed. The system includes a reading means including a plurality of antennas provided at a plurality of locations on the predetermined location and configured to read the RFID tag of the article within a reading range. Reading ranges of adjacent antennas of the plurality of antennas overlap each other, whereby the reading ranges of the plurality of antennas cover the plurality of divided areas.

The system further includes: an imaging means configured to take an image of the plurality of divided areas arranged so as to be close to or contact with each other to generate an image including a group of article consisting of one article or a plurality of articles placed on the predetermined location; and an image recognizing means configured to analyze the image to recognize a position of the group of article on the predetermined location and a type and number of article constituting the group of article. The system includes a judging means, and the judging means estimates which antenna of the plurality of antennas within the predetermined location on which the article is placed the article is placed on region corresponding to the reading range of and also where region within the reading range of the corresponding antenna the article is placed on, based on a reading result of the RFID tag by each of the plurality of antennas of the reading means, and associate the group of article recognized by the image recognizing means and the reading result of the RFID tag by the reading means with each other based on an estimating result and a recognizing result of the group of article by the image recognizing means.

### (Variant example 10)

The above embodiment and variant examples also provide the following techniques.

A gaming table system comprises:
a reading means including a plurality of antennas provided at a plurality of locations on a gaming table and configured to read an RFID tag of a gaming chip within a reading range; and
a chip judging means configured to estimate a position on which the gaming chip is placed based on a reading result of the RFID tag by each of the plurality of antennas of the reading means, wherein
reading ranges of adjacent antennas of the plurality of antennas overlap each other, whereby the reading ranges of the plurality of antennas cover a plurality of betting target areas of a betting area on the gaming table, and
the chip judging means is configured to estimate a region on which the gaming chip is placed with a resolution smaller than the reading range of the plurality of antennas based on a combination of the reading results of the plurality of antennas.

A gaming table system comprises:
a reading means including a plurality of antennas provided at a plurality of locations on a gaming table and configured to read an RFID tag of a gaming chip within a reading range; and
a chip judging means configured to estimate a position on which the gaming chip is placed based on a reading result of the RFID tag by each of the plurality of antennas of the reading means, wherein
the reading means is configured to repeatedly perform reading using the plurality of antennas, and
the chip judging means is configured to recognize a plurality of gaming chips whose RFID tags are read by a same antenna at a same timing as one chip stack, and recognize a plurality of gaming chips whose RFID tags are read by a same antenna at a different timing as other chip stack different from the one chip stack.

### DESCRIPTION OF THE REFERENCES

- 10: Gaming table
- 21: Betting area
- 30: Chip tray
- 40, 41: Camera
- 50: Card shoe
- 60: Display
- 70: Gaming chip
- 71: Centerline
- 72: RFID tag
- 80: Information processing device
- 81: Image recognizing portion
- 82: Chip judging portion
- 83: Player identifying portion
- 90: Chip database
- 91: Player database
- 100: Gaming table system
- 201-205: Betting area distinguished for each player

## Claims

1. A gaming table system configured to read on a gaming table a gaming chip in which an RFID tag is built, wherein
a betting area including a plurality of betting target areas arranged so as to be close to or contact with each other is arranged on the gaming table, and
the gaming table system comprises:
a reading means including a plurality of antennas provided at a plurality of locations on the gaming table and configured to read the RFID tag of the gaming chip within a reading range, wherein reading ranges of adjacent antennas of the plurality of antennas overlap each other, whereby the reading ranges of the plurality of antennas cover the plurality of betting target areas;
an imaging means configured to take an image of the betting area including the plurality of betting target areas arranged so as to be close to or contact with each other to generate an image including a chip stack consisting of one gaming chip or a plurality of gaming chips placed on the betting area;
an image recognizing means configured to analyze the image to recognize a position of the chip stack on the gaming table and a type and number of gaming chip constituting the chip stack; and
a chip judging means configured to estimate which antenna of the plurality of antennas within the betting area on which the gaming chip is placed the gaming chip is placed on a region corresponding to the reading range of and also where region within the reading range of the corresponding antenna the gaming chip is placed on, based on a reading result of the RFID tag by each of the plurality of antennas of the reading means, and associate the chip stack recognized by the image recognizing means and the reading result of the RFID tag by the reading means with each other based on an estimating result and a recognizing result of the chip stack by the image recognizing means.

2. The gaming table system according to claim 1, wherein
the betting area includes one region or a plurality of regions on which the RFID tag of the gaming chip placed are read by the plurality of antennas due to that the reading ranges of the antennas adjacent to each other overlap each other, and
the chip judging means is configured to estimate a region smaller than the reading range of the plurality of antennas as the region on which the gaming chip is placed based on a combination of the reading results of the plurality of antennas.

3. The gaming table system according to claim 1, wherein
the reading means is configured to repeatedly perform reading using the plurality of antennas,
the imaging means is configured to repeatedly take images to generate sequential images, and
the chip judging means is configured to associate a chip stack recognized by the image recognizing means and a reading result of the RFID tag by the reading means based on a reading result and recognizing result at a timing when a chip stack is newly placed on the betting area.

4. The gaming table system according to claim 1, wherein
the reading means is configured to repeatedly perform reading using the plurality of antennas, and
the chip judging means is configured to recognize a plurality of gaming chips whose RFID tags are read by a same antenna at a same timing as one chip stack, and recognize a plurality of gaming chips whose RFID tags are read by a same antenna at a different timing as other chip stack different from the one chip stack.

5. The gaming table system according to claim 1, further comprising a possessor identifying means configured to identify a possessor of the gaming chip based on the reading result of the RFID tag of the gaming chip by the reading means, and
the chip judging means is configured to recognize a plurality of gaming chips identified to be possessed by a same possessor by the possessor identifying means among a plurality of gaming chips placed in a same estimated region, as one chip stack.

6. The gaming table system according to claim 1, wherein
contents stored in the RFID tag built in the gaming chip includes chip identifying information for uniquely identifying the gaming chip, and
the chip judging means is configured to associate the chip identifying information of the gaming chip included in the chip stack with the chip stack recognized by the image recognizing means.

7. The gaming table system according to claim 5, further comprising a possessor updating means configured to rewrite possessor information of a gaming chip paid out by a dealer for a gaming chip which has won a game as a result of a game using the gaming chip over possessor information of the gaming chip which has won the game.

8. The gaming table system according to claim 1, wherein
the chip stack consisting of the one gaming chip or plurality of gaming chips placed on the betting area is a chip stack bet on a game, and
the chip judging means is configured to associate, for the bet chip stack, the chip stack recognized by the image recognizing means and the reading result of the RFID tag by the reading means with each other.

9. The gaming table system according to claim 1, wherein
the chip stack consisting of the one gaming chip or plurality of gaming chips placed in the betting area is a chip stack paid by a dealer for a chip stack which has bet on a game and won the game, and
the chip judging means is configured to associate, for the paid chip stack, the chip stack recognized by the image recognizing means and the reading result of the RFID tag by the reading means with each other.

10. The gaming table system according to claim 1, wherein the reading ranges of the plurality of antennas cover the entire betting area on the gaming table.

11. The gaming table system according to claim 1, wherein the chip judging means is configured to judge, when a number of gaming chip whose placed region is estimated based on the reading result of the RFID tag is less than a number of gaming chip which is recognized to be placed within the region by the image recognizing means, that the chip stack includes an illicit gaming chip of which there is an illicitness in the RFID tag within the region.

12. The gaming table system according to claim 1, wherein the chip judging means is configured to judge, when a number of gaming chip whose placed region is estimated based on the reading result of the RFID tag is more than a number of gaming chip which is recognized to be placed within the region by the image recognizing means, that a gaming chip which is in a blind spot of the imaging means and not recognized by the image recognizing means is included within the region.

13. The gaming table system according to claim 1, wherein
type identifying information for identifying a type of gaming chip is to be stored in the RFID tag built in the gaming chip, and
the chip judging means is configured to judge, for the chip stack recognized by the image recognizing means, that the chip stack includes an illicit gaming chip when a type and number of gaming chip indicated by the reading result of the RFID tag is different from the type and number of gaming chip in the chip stack recognized by the image recognizing means.

14. The gaming table system according to claim 11, wherein
type identifying information for identifying a type of gaming chip is to be stored in the RFID tag built in the gaming chip, and
the chip judging means is further configured to identify the chip stack including the illicit gaming chip among the chip stacks recognized by the image recognizing means based on a type and number of gaming chip indicated by the reading result of the RFID tag and the type and number of gaming chip recognized by the image recognizing means.

15. The gaming table system according to claim 11 or 12, wherein the chip judging means is configured to judge that a plurality of chip stacks whose possibility of including the illicit gaming chip is greater than a predetermined threshold value is the chip stack including the illicit gaming chip when the chip judging means cannot identify uniquely the chip stack including the illicit gaming chip.

16. The gaming table system according to claim 1, wherein
type identifying information for identifying a type of gaming chip is to be stored in the RFID tag built in the gaming chip,
the type of gaming chip corresponds to a value of the gaming chip, and
the chip judging means is configured to judge an amount of the chip stack based on the type identifying information.

17. The gaming table system according to claim 1, further comprising a player identifying means configured to identify a player playing a game on the gaming table, and
the chip judging means is further configured to identify a player corresponding to the chip stack recognized by the image recognizing means.

18. The gaming table system according to claim 1, wherein
chip identifying information for uniquely identifying the gaming chip is to be stored in the RFID tag built in the gaming chip,
the betting area includes a betting area provided for each of a plurality of players, and
the gaming table system further comprises:
a database configured to store chip identifying information and player identifying information for identifying a player so as to associate with each other;
a player identifying means configured to identify player identifying information of players playing in the plurality of player positions; and
an alert means configured to output an alert when the player identifying information identified by the player identifying means is not associated in the database with the chip identifying information of the gaming chip identified as being in the player position at which the player plays.

19. A system configured to read on a predetermined location an article in which an RFID tag is built, wherein
a plurality of divided areas arranged so as to be close to or contact with each other is arranged on the predetermined location, and
the system comprises:
a reading means including a plurality of antennas provided at a plurality of locations on the predetermined location and configured to read the RFID tag of the article within a reading range, wherein reading ranges of adjacent antennas of the plurality of antennas overlap each other, whereby the reading ranges of the plurality of antennas cover the plurality of divided areas;
an imaging means configured to take an image of the plurality of divided areas arranged so as to be close to or contact with each other to generate an image including a group of article consisting of one article or a plurality of articles placed on the predetermined location;
an image recognizing means configured to analyze the image to recognize a position of the group of article on the predetermined location and a type and number of article constituting the group of article; and
a judging means configured to estimate which antenna of the plurality of antennas within the predetermined location on which the article is placed the article is placed on region corresponding to the reading range of and also where region within the reading range of the corresponding antenna the article is placed on, based on a reading result of the RFID tag by each of the plurality of antennas of the reading means, and associate the group of article recognized by the image recognizing means and the reading result of the RFID tag by the reading means with each other based on an estimating result and a recognizing result of the group of article by the image recognizing means.

20. A gaming table system configured to read on a gaming table a gaming chip in which an RFID tag is built, wherein
a betting area including a plurality of betting target areas arranged so as to be close to or contact with each other is arranged on the gaming table, and
the gaming table system comprises:
a reading means including a plurality of antennas provided at a plurality of locations on the gaming table and configured to read the RFID tag of the gaming chip within a reading range; and
a chip judging means configured to estimate a position on which the gaming chip is placed based on a reading result of the RFID tag by each of the plurality of antennas of the reading means, wherein
reading ranges of adjacent antennas of the plurality of antennas overlap each other, whereby the reading ranges of the plurality of antennas cover the plurality of betting target areas, and
the chip judging means is configured to estimate a region on which the gaming chip is placed with a resolution smaller than the reading range of the plurality of antennas based on a combination of the reading results of the plurality of antennas.

21. A gaming table system configured to read on a gaming table a gaming chip in which an RFID tag is built, wherein
a betting area including a plurality of betting target areas arranged so as to be close to or contact with each other is arranged on the gaming table, and
the gaming table system comprises:
a reading means including a plurality of antennas provided at a plurality of locations on the gaming table and configured to read the RFID tag of the gaming chip within a reading range; and
a chip judging means configured to estimate a position on which the gaming chip is placed based on a reading result of the RFID tag by each of the plurality of antennas of the reading means,
the reading means is configured to repeatedly perform reading using the plurality of antennas, and
the chip judging means is configured to recognize a plurality of gaming chips whose RFID tags are read by a same antenna at a same timing as one chip stack, and recognize a plurality of gaming chips whose RFID tags are read by a same antenna at a different timing as other chip stack different from the one chip stack.
